# EUROPEAN PATENT APPLICATION

(11) **EP 4 768 436 A1**
(43) Date of publication of application: **01.07.2026**
(21) Application number: 25845384.4
(22) Date of filing: 22.07.2025
(51) Int. Cl.: C01B 32/205, H01M 4/583, H01M 4/36, H01M 4/133, H01M 10/052, H01M 4/02

(54) **GRAPHITE-BASED NEGATIVE ELECTRODE ACTIVE MATERIAL, METHOD FOR MANUFACTURING SAME, AND NEGATIVE ELECTRODE AND LITHIUM SECONDARY BATTERY COMPRISING SAME**

(30) Priority: 22.07.2024 KR 20240096748
(71) Applicant: LG Energy Solution, Ltd., Seoul 07335 (KR)
(72) Inventor: IM, Ui Su, Daejeon 34122 (KR); LIM, Ga Hyun, Daejeon 34122 (KR); JIN, So Yeon, Daejeon 34122 (KR); JUN, Hyun Min, Daejeon 34122 (KR); LEE, Jun Won, Daejeon 34122 (KR); WOO, Sang Wook, Daejeon 34122 (KR); LEE, Chang Ju, Daejeon 34122 (KR)
(74) Representative: Hoffmann Eitle
(86) International application number: PCT/KR2025/010767
(87) International publication number: WO 2026/024037

(57) **Abstract**

The present invention relates to a graphite-based negative electrode active material having excellent rapid charging performance by including artificial graphite having an interplanar spacing d(002) of a (002) plane of 0.3360 nm to 0.3370 nm and a crystallite size Lc in a c-axis direction of 30.0 nm to 38.5 nm and a method of preparing the same.

## Description

### TECHNICAL FIELD

This application claims priority from Korean Patent Application No. 10-2024-0096748, filed on July 22, 2024, the disclosure of which is incorporated by reference herein.

The present invention relates to a graphite-based negative electrode active material having excellent rapid charging performance, a method of preparing the same, and a negative electrode and a lithium secondary battery which include the same.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

A typical example of an electrochemical device using the electrochemical energy may be a secondary battery and there is a trend that its usage area is expanding more and more. In recent years, demand for secondary batteries as an energy source for electronic devices and electric vehicles has been significantly increased. In general, a secondary battery is composed of a positive electrode, a negative electrode, an electrolyte, and a separator. The negative electrode includes a negative electrode active material in which lithium ions released from the positive electrode are intercalated and deintercalated, and a carbon-based active material, for example, natural graphite or artificial graphite is mainly used as the negative electrode active material.

Development of a secondary battery having excellent rapid charging performance is required as demand for electric vehicles has increased recently. Since charge rate of the secondary battery is affected by the negative electrode rather than the positive electrode, research is being conducted to enhance rapid charging performance of the secondary battery by improving charging performance of a negative electrode material.

For this purpose, techniques using a silicon (Si)-based negative electrode active material with excellent rapid charging performance have been proposed, but there is a problem in that life characteristics are degraded when using the Si-based negative electrode active material because the Si-based negative electrode active material has a large volume change during charge and discharge. Also, there is a problem in that cost of the battery is increased because the Si-based negative electrode active material is more expensive than the carbon-based negative electrode active material.

Thus, there is a need for a method capable of improving charging performance of the carbon-based negative electrode active material which has a small volume change during charge and discharge and is relatively inexpensive.

### DISCLOSURE OF THE INVENTION

### TECHNICAL PROBLEM

An aspect of the present invention provides a graphite-based negative electrode active material with excellent rapid charging performance by having a small graphite crystal size and including cavities in its crystal structure and a method of preparing the same.

Also, another aspect of the present invention provides a negative electrode and a lithium secondary battery which have excellent rapid charging performance by including the above-described graphite-based negative electrode active material.

### TECHNICAL SOLUTION

[1] The present invention provides a method of preparing a graphite-based negative electrode active material which includes: forming a precursor having an oxygen content of 3 wt% to 15 wt% by grinding and granulating a carbon-based raw material; and preparing artificial graphite having an interplanar spacing d(002) of a (002) plane of 0.3360 nm to 0.3370 nm and a crystallite size Lc in a c-axis direction of 30.0 nm to 38.5 nm by graphitizing the precursor.
[2] The present invention provides the method of [1] above, wherein the carbon-based raw material includes needle cokes, mosaic cokes, coaltar pitch, resin pitch, soft carbon, or a combination thereof.
[3] The present invention provides the method of [1] or [2] above, wherein the forming of the precursor having an oxygen content of 3 wt% to 15 wt% is performed by performing at least one of the grinding and the granulating while heating to 200°C to 300°C in an oxygen atmosphere.
[4] The present invention provides the method of [3] above, wherein the heating is performed at a heating rate of 1°C/min to 20°C/min.
[5] The present invention provides the method of [1] or [2] above, wherein the forming of the precursor having an oxygen content of 3 wt% to 15 wt% is performed by a method of grinding and granulating the raw material and supplying air at 100°C to 300°C to bring the air into contact with the raw material.
[6] The present invention provides the method of at least one of [1] to [5] above, wherein the method further includes forming a carbon-based coating layer by mixing the artificial graphite with a carbonaceous material and carbonizing the mixture, after the preparing of the artificial graphite.
[7] The present invention provides the method of [6] above, wherein the carbonaceous material is pitch.
[8] The present invention provides the method of at least one of [1] to [7] above, wherein the artificial graphite comprises cavities in a crystal lattice.
[9] The present invention provides a graphite-based negative electrode active material including artificial graphite having an interplanar spacing d(002) of a (002) plane of 0.3360 nm to 0.3370 nm and a crystallite size Lc in a c-axis direction of 30.0 nm to 38.5 nm.
[10] The present invention provides the graphite-based negative electrode active material of [9] above, wherein the graphite-based negative electrode active material has a tap density of 0.90 g/cc or more.
[11] The present invention provides the graphite-based negative electrode active material of [9] or [10] above, wherein the artificial graphite is prepared by graphitizing a precursor having an oxygen content of 3 wt% to 15 wt%.
[12] The present invention provides a negative electrode including any one of the graphite-based negative electrode active materials of claims [9] to [11] above.
[13] The present invention provides the negative electrode of [12] above, wherein, when a half-cell prepared with the negative electrode and a lithium metal counter electrode is charged at 3C, a state of charge (SOC) value at which lithium precipitation occurs is 35% or more.
[14] The present invention provides a lithium secondary battery including the negative electrode of [12] or [13] above.

### ADVANTAGEOUS EFFECTS

The present invention enables preparation of artificial graphite having a small crystal size and including cavities in a crystal structure by controlling an oxygen content of a precursor during the preparation of the artificial graphite to inhibit transformation of the crystal structure into an sp2 structure in a carbonization temperature range of a graphitization process.

Also, in a case in which artificial graphite is prepared by using a precursor having a relatively high oxygen content as in the present invention, since high-density artificial graphite may be prepared by reducing an amount of a highly volatile organic component in the precursor to reduce volatile matter in the carbonization temperature range, a graphite-based negative electrode active material having excellent mechanical properties and less particle breakage may be prepared.

Since the graphite-based negative electrode active material according to the present invention includes artificial graphite having a smaller crystallite size than a conventional negative electrode active material and including cavities in its crystal structure, lithium ion mobility is high within the artificial graphite and intercalation/deintercalation of lithium ions is easy due to a short lithium ion movement path, and thus, it has excellent charging performance. Therefore, in a case in which the graphite-based negative electrode active material of the present invention is used, a lithium secondary battery having excellent rapid charging performance may be achieved.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

### Method of Preparing Graphite-Based Negative Electrode Active Material

First, a method of preparing a graphite-based negative electrode active material according to the present invention will be described.

The method of preparing a graphite-based negative electrode active material according to the present invention includes the steps of: (1) forming a precursor having an oxygen content of 3 wt% to 15 wt% by grinding and granulating a carbon-based raw material, and (2) preparing a graphite-based negative electrode active material by graphitizing the precursor, wherein, if necessary, the method may further include a step of (3) forming a carbon coating layer by mixing the precursor with a carbonaceous material and carbonizing the mixture after the graphitizing.

Hereinafter, each step of the preparation method according to the present invention will be described in detail.

### (1) Precursor-Forming Step

First, a carbon-based raw material is prepared, and the carbon-based raw material is ground and granulated to form a precursor having an oxygen content of 3 wt% to 15 wt%, preferably, 3 wt% to 10 wt%.

Specifically, the precursor having an oxygen content of 3 wt% to 15 wt%, preferably, 3 wt% to 10 wt% may be formed by controlling temperature and atmosphere of grinding and/or a granulation process of the carbon-based raw material, or by additionally performing a surface modification process after completion of the grinding and the granulation of the carbon-based raw material.

When the oxygen content of the precursor satisfies the above range, artificial graphite having excellent rapid charging performance and capacity characteristics may be prepared. More specifically, in a case in which the oxygen content of the precursor is less than 3 wt%, cavity formation is reduced and surface density may be reduced during the granulation process, and, in a case in which the oxygen content is greater than 15 wt%, there is a problem in that granulation strength is reduced.

In a case in which the oxygen content of the precursor is high, transformation of an sp3 structure, as an amorphous structure, into an sp2 structure, as a crystalline structure, is inhibited by oxygen in a temperature range of 900°C to 1300°C (carbonization temperature range). Accordingly, in a case in which a precursor having a high oxygen content is used, crystallization occurs in a state in which an amount of the amorphous structure is relatively larger than a case where a precursor having a low oxygen content is used, and, as a result, cavities are formed in the crystal structure and graphite having a small crystal size is formed.

With respect to the carbonaceous raw material such as coke or soft carbon, a swelling phenomenon may occur in which a volume expands as highly volatile organic hydrocarbons rapidly volatilize in a temperature range of 600°C to 900°C, wherein if such swelling occurs, since density of artificial graphite is reduced, there is a problem in that mechanical properties are deteriorated and particle breakage occurs. However, in the case that the oxygen content in the precursor is high as in the present invention, since an amount of highly volatile organic hydrocarbons in the raw material is reduced, a phenomenon of a rapid increase in volatile matter in a temperature range of less than 1,000°C may be suppressed, and accordingly, high-density artificial graphite may be prepared.

The carbon-based raw material may include needle cokes, mosaic cokes, coaltar pitch, resin pitch, soft carbon, or a combination thereof, and may preferably include needle cokes, mosaic cokes, soft carbon, or a combination thereof.

When the carbon-based raw material is prepared, the carbon-based raw material is ground. The grinding may be performed using a grinding method generally known in the art, for example, a jet mill, a hammer mill, a roller mill, a pin mill, a vibration mill, or an impact mill, and the method is not particularly limited. A type of grinder and grinding type may be appropriately selected depending on a type of the carbon-based raw material during the grinding.

The grinding may be performed such that an average particle diameter (D₅₀) of the carbon-based raw material is in a range of 1 µm to 20 µm, preferably, 5 µm to 15 µm. If the particle diameter of the raw material after the grinding is excessively small, discharge capacity may be reduced, and if the particle diameter is excessively large, the rapid charging performance may be degraded.

After preparing a sample by diluting the carbon-based raw material to 1 wt% with deionized water, the average particle diameter (D₅₀) of the carbon-based raw material may be measured by obtaining a volume cumulative particle size distribution by a laser diffraction method using a particle size measurement instrument (Microtrac s3500).

Next, once the carbon-based raw material is ground to an appropriate size, a granulation process is performed. The granulation process, for example, may be performed by introducing the ground particles into a mixing device, such as Mechanofusion or Nobilta, and applying mechanical compression and/or shear force. In the granulation process, if necessary, a binder, such as pitch, polyvinyl alcohol, starch, and carboxymethyl cellulose, may be additionally added to the mixing device.

According to an embodiment, the grinding and/or the granulation process may be performed in an oxygen atmosphere while heating. In this case, the oxygen atmosphere means a gaseous atmosphere containing 20 wt% or more of oxygen, wherein it includes an air atmosphere.

The heating may be performed to 200°C to 300°C, and it is desirable that a heating rate is in a range of 1°C/min to 20°C/min, preferably, about 2°C/min to about 10°C/min.

If the grinding and/or the granulation is performed under the oxygen atmosphere and heating conditions as described above, since a particle surface is modified by an oxidation reaction, a precursor having a higher oxygen content than a conventional precursor, specifically, an oxygen content of 3 wt% to 15 wt%, preferably, 3 wt% to 10 wt% may be formed.

According to another embodiment, a precursor having a higher oxygen content than a conventional precursor, specifically, an oxygen content of 3 wt% to 15 wt%, preferably, 3 wt% to 10 wt% may also be formed by additionally performing a process of contacting high-temperature air with the granulated particles (precursor) by supplying (air blowing) the high-temperature air, after the grinding and the granulation process of the carbon-based raw material.

In a case in which the process of contacting high-temperature air is additionally performed as described above, the grinding and/or the granulation process may be performed under an oxygen atmosphere and heating conditions as in the above-described embodiment, or may be performed at room temperature.

In the process of contacting high-temperature air, temperature of the air may be in a range of 100°C to 300°C, preferably, 130°C to 250°C. If the high-temperature air is in contact with the precursor as described above, a precursor having a high oxygen content is formed as a surface of the precursor is oxidized. In a case in which the temperature of the air in contact with the precursor is less than 100°C, it is difficult for the oxygen content of the precursor to be 3 wt% or more, and in a case in which the temperature of the air is greater than 300°C, a problem may occur in which the binder, such as pitch, is reduced or removed.

In a case in which the binder, such as pitch, is used in the granulation process, the temperature of the air may be lower than a softening point of the binder. For example, the temperature of the air may be 10°C to 60°C, preferably, 30°C to 50°C lower than the softening point of the binder.

Contact time of the high-temperature air with the precursor may be appropriately adjusted depending on the temperature of the air, and, for example, may be 20 minutes to 150 minutes, 30 minutes to 140 minutes, or 60 minutes to 120 minutes. The higher the temperature of the air, the shorter the contact time may be. For example, in a case in which the temperature of the air is 50°C lower than the softening point of the binder, the contact time may be about 100 minutes to about 140 minutes, and in a case in which the temperature of the air is 30°C lower than the softening point of the binder, the contact time may be about 20 minutes to about 40 minutes. When the contact time with the high-temperature air satisfies the above range, it is easy to control the oxygen content of the precursor to 3 wt% to 15 wt%. If the contact time is excessively short, it is difficult to reach the target oxygen content due to insufficient surface modification, and if the contact time is excessively long, a problem may occur in which the binder, such as pitch, is reduced or removed.

### (2) Graphitization Process

When the precursor having an oxygen content of 3 wt% to 15 wt% is prepared through the above-described process, the precursor is graphitized to prepare artificial graphite.

The graphitizing may be performed using a graphitization device and a method which are well known in the art. For example, the graphitizing may be performed by a method of introducing the precursor into a graphitization furnace, such as an Acheson graphitization furnace, a box type graphitization furnace, or a lengthwise graphitization furnace, and heating to a temperature range of 2,000°C to 3,500°C, 2,500°C to 3,500°C, or 2,800°C to 3,500°C.

As described above, in the case that the graphitization process is performed using the precursor having an oxygen content of 3 wt% to 15 wt%, the transformation of the amorphous structure into the crystalline structure in the carbonization temperature range is inhibited by the oxygen contained in the precursor, and as a result, since crystallization occurs in a state in which an amorphous content is relatively high, cavities are formed in the crystal structure and a crystallite size is formed to be relatively small.

Specifically, the artificial graphite according to the present invention may include cavities in its crystal structure. In a case in which the cavities are formed in the crystal structure, since lithium ion mobility within the artificial graphite is enhanced, the rapid charging performance may be improved.

In the case that the cavities are included in the crystal structure, an interplanar spacing d(002) of a (002) plane is relatively increased, and a crystallite size Lc in a c-axis direction is relatively decreased. Thus, the inclusion of the cavities in the crystal structure may be deduced from d(002) and Lc values. The artificial graphite prepared according to the method of the present invention may have an interplanar spacing d(002) of a (002) plane, which is measured by X-ray diffraction (XRD), of 0.3360 nm or more, preferably 0.3360 nm to 0.3370 nm, and more preferably 0.3360 nm to 0.3365 nm, and a crystallite size Lc in a c-axis direction, which is measured by XRD, of 38.5 nm or less, preferably 30.0 nm to 38.5 nm, and more preferably 34 nm to 38.5 nm.

### (3) Carbonization Process

Although not essential, a step of forming a carbon-based coating layer by mixing the artificial graphite with a carbonaceous material and carbonizing the mixture may be additionally performed after the preparing of the artificial graphite.

In a case in which the carbon-based coating layer is formed on a surface of the artificial graphite, since bonding of artificial graphite particles constituting the granulated particles is strong, stability of the granulated particles may be improved during charge and discharge and the rapid charging performance may be further improved.

The carbonaceous material, for example, may be pitch, and a commonly used solid pitch or liquid pitch may be used. The solid pitch may be obtained by grinding coal tar pitch, petroleum pitch, synthetic pitch, or wood tar pitch. The liquid pitch may be prepared by dissolving a liquid resin or solid pitch in a solvent, coating the solution, and then carbonizing the solution. In this case, hexane, toluene, tetrahydrofuran (THF), quinoline, N-methylpyrrolidone (NMP), or ethanol may be used as the solvent.

The carbonaceous material may be mixed in an amount of 1 part by weight to 10 parts by weight, 1 part by weight to 5 parts by weight, or 3 parts by weight to 5 parts by weight based on 100 parts by weight of the artificial graphite. When the mixing amount of the carbonaceous material satisfies the above range, granulation stability of the graphite-based negative electrode active material is improved, and the rapid charging performance is improved. If the amount of the carbonaceous material is excessively small, an effect of improving the granulation stability and rapid charging performance is insignificant, and if the amount of the carbonaceous material is excessively large, since an excessively thick carbon coating layer is formed, electrochemical properties may be deteriorated.

The mixing of the artificial graphite with the carbonaceous material may be performed by methods generally known in the art and is not particularly limited. For example, the mixing may be performed using a mechanochemical method, for example, a kneader such as a two-roll mill, a blade, a mechanomicro system, an extruder, a ball mill, a planetary mill, a mechanofusion system, Nobilta, hydridization, and a rotary ball mill, or using a spray drying method or an emulsion method.

When the artificial graphite and the carbonaceous material are homogeneously mixed, a carbon coating layer is formed by carbonizing the mixture at a temperature of 1,000°C to 1,600°C, preferably, 1,200 to 1,400°C. In this case, carbonization treatment time, for example, may be in a range of 18 hours to 30 hours or 20 hours to 26 hours. When the carbonization treatment temperature and time satisfy the above ranges, carbon stabilization is sufficiently achieved, impurities in the carbonaceous material are almost removed, and modification of properties of the coated surface by an excessively high temperature may be prevented.

The carbon coating layer formed as described above may be formed of amorphous or crystalline carbon.

### Graphite-Based Negative Electrode Active Material

The graphite-based negative electrode active material according to the present invention includes artificial graphite having an interplanar spacing d(002) of a (002) plane, which is measured by X-ray diffraction (XRD), of 0.3360 nm or more, preferably 0.3360 nm to 0.3370 nm, and more preferably 0.3360 nm to 0.3365 nm, and a crystallite size Lc in a c-axis direction, which is measured by XRD, of 38.5 nm or less, preferably 30.0 nm to 38.5 nm, and more preferably 34 nm to 38.5 nm.

In a case in which the d(002) and the Lc of the artificial graphite satisfy the above ranges, excellent rapid charging performance may be achieved. Specifically, in the case that the d(002) and the Lc of the artificial graphite satisfy the above ranges, it may be considered that cavities are formed between crystal lattices, and, in a case in which the cavities are included in the crystal structure, since the lithium ion mobility within the artificial graphite is enhanced, the rapid charging performance is improved.

The artificial graphite, in which the d(002) and the Lc satisfy the above ranges, may be prepared by graphitizing the precursor having an oxygen content of 3 wt% to 15 wt%, and may specifically be prepared according to the above-described method of the present invention.

The graphite-based negative electrode active material may further include a carbon-based coating layer on the surface of the artificial graphite. The carbon-based coating layer may be formed by mixing the artificial graphite with a carbonaceous material such as pitch, and then carbonizing the mixture. Since a method of forming the carbon-based coating layer is the same as described above, a detailed description will be omitted.

The graphite-based negative electrode active material may have a tap density of 0.90 g/cc or more, preferably 1.00 g/cc to 1.30 g/cc, and more preferably 1.00 g/cc to 1.20 g/cc. If the tap density satisfies the above range, since a high electrode density may be achieved, excellent capacity characteristics are exhibited.

### Negative Electrode

Next, a negative electrode according to the present invention will be described.

The negative electrode according to the present invention includes the above-described graphite-based negative electrode active material according to the present invention as a negative electrode active material. For example, the negative electrode may include a negative electrode active material layer including the graphite-based negative electrode active material according to the present invention, and the negative electrode may specifically include a negative electrode collector and a negative electrode active material layer disposed on the negative electrode collector.

The negative electrode active material may be formed of the graphite-based negative electrode active material according to the present invention, or other types of negative electrode active materials (e.g., natural graphite, siliconbased negative electrode active material, etc.) other than the graphite-based negative electrode active material may be mixed and used.

The negative electrode active material may be included in an amount of 90 wt% to 99.5 wt%, 93 wt% to 99 wt%, or 95 wt% to 98.5 wt% based on a total weight of the negative electrode active material layer.

The negative electrode collector is not particularly limited as long as it has high conductivity without causing chemical changes in the battery. The negative electrode collector may be used in various shapes such as that of a film, a sheet, a foil, a net, a porous body, a foam body, a nonwoven fabric body, and the like, and a material of the negative electrode collector, for example, may be copper, nickel, stainless steel, nickel, titanium, fired carbon, or a combination thereof. The negative electrode collector may typically have a thickness of 3 µm to 500 µm. If necessary, microscopic irregularities may be formed on the surface of the collector to improve adhesion of the negative electrode active material.

The negative electrode active material layer may be disposed on the current collector. The negative electrode active material layer may be disposed on at least one surface of the current collector, and may specifically be disposed on one surface or both surfaces of the current collector.

The negative electrode active material layer may further include at least one of a binder and a conductive agent in addition to the negative electrode active material.

The binder may include at least one selected from the group consisting of a polyvinylidene fluoridehexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

The binder may be included in an amount of 0.1 wt% to 8 wt%, 0.5 wt% to 5 wt%, or 0.8 wt% to 4 wt% based on the total weight of the negative electrode active material layer.

The conductive agent is not particularly limited as long as it has conductivity without causing chemical changes in the battery, wherein, for example, a conductive material, such as: graphite such as natural graphite or artificial graphite; carbon black such as carbon black, acetylene black, Ketjen black, channel black, furnace black, lamp black, and thermal black; conductive fibers such as carbon fibers and metal fibers; conductive tubes such as carbon nanotubes; fluorocarbon, metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 0.1 wt% to 8 wt%, 0.5 wt% to 5 wt%, or 0.8 wt% to 4 wt% based on the total weight of the negative electrode active material layer.

After preparing a negative electrode slurry by mixing the negative electrode active material with optionally the binder and the conductive agent in a solvent such as N-methyl-2-pyrrolidone (NMP) or water, the negative electrode may be prepared by coating the negative electrode collector with the negative electrode slurry, and drying and rolling the coated negative electrode collector.

Since the negative electrode according to the present invention includes the graphite-based negative electrode active material including artificial graphite having a smaller crystallite size than conventional artificial graphite and including cavities in the crystal structure, the mobility of lithium ions in the negative electrode active material is excellent and the intercalation/deintercalation of the lithium ions is easy, and thus, the rapid charging performance is excellent.

Rapid charging performance of a negative electrode may be evaluated through a state of charge (SOC) value at which lithium precipitation occurs when a half-cell prepared with the negative electrode and a lithium metal counter electrode is charged at 3C. An SOC at which lithium precipitation occurs during 3C charging of a half-cell, which is prepared by using a negative electrode using a conventional graphite-based negative electrode active material, is less than 35%, whereas an SOC value at which lithium precipitation occurs during 3C charging of a half-cell prepared by using the negative electrode according to the present invention is 35% or more which is greater than that of the conventional half-cell. This shows that the rapid charging performance of the negative electrode using the negative electrode active material according to the present invention is better than that of a conventional negative electrode.

### Lithium Secondary Battery

Next, a lithium secondary battery according to the present invention will be described.

The lithium secondary battery according to the present invention includes the above-described negative electrode according to the present invention. Specifically, the secondary battery according to the present invention may include the above-described negative electrode; a positive electrode facing the negative electrode; a separator disposed between the negative electrode and the positive electrode; and an electrolyte.

Since the negative electrode has been described above, components excluding the negative electrode will be described below.

The positive electrode may include a positive electrode collector; and a positive electrode active material layer formed on the positive electrode collector.

The positive electrode collector is not particularly limited as long as it has high conductivity without causing chemical changes in the battery. The positive electrode collector may be used in various shapes such as that of a film, a sheet, a foil, a net, a porous body, a foam body, a nonwoven fabric body, and the like, and a material of the positive electrode collector, for example, may be aluminum, stainless steel, nickel, titanium, fired carbon, an aluminum-cadmium alloy, or a combination thereof. The positive electrode collector may typically have a thickness of 3 µm to 500 µm. If necessary, microscopic irregularities may be formed on the surface of the positive electrode collector to improve adhesion of a positive electrode active material.

The positive electrode active material layer includes a positive electrode active material, and may further include a conductive agent and a binder, if necessary.

As the positive electrode active material, various positive electrode active materials used in the art may be used without limitation, and the positive electrode active material is not particularly limited. For example, the positive electrode active material may include a layered compound, such as lithium cobalt oxide (LiCoO₂) or lithium nickel oxide (LiNiO₂), or a compound substituted with one or more transition metals; lithium phosphate-based compounds such as LiFe₁₋ₐMnₐPO₄ (O≤a≤1); lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; lithium nickel oxide expressed by a chemical formula of LiNi_{1-c2}M_{c2}O₂ (where M is at least one selected from the group consisting of cobalt (Co), manganese (Mn), aluminum (Al), zirconium (Zr), yttrium (Y), tungsten (W), molybdenum (Mo), copper (Cu), iron (Fe), magnesium (Mg), boron (B), and gallium (Ga), and c2 satisfies 0.01≤c2≤0.3); and lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃M'O₈ (where M' is at least one selected from the group consisting of Fe, Co, Ni, Cu, and Zn), but the positive electrode active material is not limited thereto.

The binder is a component that assists in the binding between the active material and the conductive agent and in the binding with the current collector, wherein the binder may specifically include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber, and a fluoro rubber, preferably, polyvinylidene fluoride.

The conductive agent may be used to assist and improve conductivity in the secondary battery, and is not particularly limited as long as it has conductivity without causing chemical changes. Specifically, the conductive agent may include at least one selected from the group consisting of graphite such as natural graphite or artificial graphite; carbon black such as carbon black, acetylene black, Ketjen black, channel black, furnace black, lamp black, and thermal black; conductive fibers such as carbon fibers and metal fibers; conductive tubes such as carbon nanotubes; fluorocarbon, metal powder such as aluminum powder and nickel powder; conductive whiskers such as zinc oxide whiskers and potassium titanate whiskers; conductive metal oxide such as titanium oxide; and polyphenylene derivatives.

After preparing a positive electrode slurry by mixing the positive electrode active material with optionally the binder and the conductive agent in an organic solvent such as N-methyl-2-pyrrolidone (NMP), the positive electrode may be prepared by coating the positive electrode collector with the positive electrode slurry, and drying and rolling the coated positive electrode collector.

The separator separates the negative electrode and the positive electrode and provides a movement path of lithium ions, wherein any separator may be used as the separator without particular limitation as long as it is typically used in a lithium secondary battery. For example, the separator may include a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof, and/or a nonwoven fabric formed of high melting point glass fibers or polyethylene terephthalate fibers as a base material. A coated separator including a ceramic component and/or a polymer material may be used on the base material to secure heat resistance or mechanical strength.

Next, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but the present invention is not limited thereto.

For example, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a lowviscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or a combination thereof may be used as the lithium salt. The lithium salt may be used in a concentration range of 0.1 M to 4.0 M, preferably 0.5 M to 3.0 M, and more preferably 0.8 M to 2.0 M. Since the electrolyte may have appropriate conductivity and viscosity when the concentration of the lithium salt is included within the above range, excellent performance of the electrolyte may be obtained and lithium ions may effectively move.

The secondary battery may be prepared by disposing the separator between the above-described negative electrode and positive electrode and then injecting an electrolyte solution according to a conventional method of preparing a secondary battery.

The lithium secondary battery according to the present invention may be particularly suitably used as a power source for electric vehicles because it has excellent rapid charging performance by using the negative electrode active material having excellent charging performance.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Comparative Example 1

A coke raw material was introduced into a planetary mill and ground until an average particle diameter (D50) reached 8 µm. The ground coke raw material and pitch were introduced into a granulator and granulated to prepare a precursor. In this case, the grinding and the granulation were performed at room temperature, atmospheric pressure, and in an air atmosphere.

The prepared precursor was put into a graphitization furnace, heated to 3,000°C at a heating rate of 0.5°C/min, maintained for 12 hours, and then cooled to prepare artificial graphite.

### Comparative Example 2

A precursor and artificial graphite were prepared in the same manner as in Comparative Example 1 except that an air blowing process at 100°C was performed for 1 hour before putting the precursor into the graphitization furnace after the grinding and granulation.

### Example 1

A precursor and artificial graphite were prepared in the same manner as in Comparative Example 1 except that an air blowing process at 170°C was performed for 1 hour before putting the precursor into the graphitization furnace after the grinding and granulation.

### Example 2

A precursor and artificial graphite were prepared in the same manner as in Comparative Example 1 except that an air blowing process at 220°C was performed for 1 hour before putting the precursor into the graphitization furnace after the grinding and granulation.

### Example 3

A precursor and artificial graphite were prepared in the same manner as in Comparative Example 1 except that an air blowing process at 300°C was performed for 1 hour before putting the precursor into the graphitization furnace after the grinding and granulation.

### Experimental Example 1 - Precursor Oxygen Content Measurement

The precursors prepared in Examples 1 to 3 and Comparative Examples 1 and 2 were collected and elemental content of each precursor was measured using the following method. Measurement results are presented in Table 1 below.

### <Elemental Content Measurement Method>

Each precursor was introduced into an elemental analyzer and combusted while increasing the temperature. During a combustion process of the precursor, CO₂, H₂O, N₂, and SO₂ gases were mainly generated up to about 1,000°C, and CO gas was generated as oxygen (O) was thermally decomposed around 1,060°C. The generated gases were separated through a gas chromatography (GC) column, and contents of C, H, N, O, and S were quantitatively analyzed using a thermal conductive detector (TCD).

**[Table 1]**

| | Comparativ e Example 1 | Comparativ e Example 2 | Example 1 | Example 2 | Example 3 |
|---|---|---|---|---|---|
| C(wt%) | 96.1 | 94.1 | 92.6 | 91.7 | 86.2 |
| H(wt%) | 2.2 | 3.4 | 2.8 | 2.5 | 3.9 |
| N(wt%) | 1.3 | 0.8 | 0.9 | 1.1 | 2.1 |
| O(wt%) | 0.3 | 1.6 | 3.6 | 4.6 | 7.7 |
| S(wt%) | 0.1 | 0.1 | 0.1 | 0.1 | 0.1 |

### Experimental Example 2

Tap density, d(002), and Lc(002) of each artificial graphite prepared by Examples 1 to 3 and Comparative Examples 1 and 2 were measured by the following methods. Measurement results are presented in Table 2 below.
**(1) Tap density (cc/g):** 40 g of the artificial graphite was collected and then put in a sample container for tap density measurement with a marked volume, and a volume after tapping 1,000 times was measured to calculate the tap density.
**(2) d(002) and Lc(002):** An artificial graphite sample was put in a powder measurement holder, and a surface of the sample was irradiated with X-rays under the following conditions using Bruker's D8 XRD equipment (Cu, λ=1.5418Å) to perform the measurement.

### <XRD Measurement Conditions>

Opening degree: 0.5°
Fixed sample distance: 3 mm
Step size for 2θ = 20° to 80°: 0.00428°
total scan time = about 75 minutes

### Experimental Example 3

An electrode assembly was prepared by disposing a separator between a lithium counter electrode and each of the negative electrodes prepared by Examples 1 to 4 and Comparative Examples 1 to 3, the electrode assembly was disposed in a battery case, and an electrolyte was then injected to prepared a coin half-cell.

The coin half-cell was charged at 3.0C in a constant current (CC) mode to obtain a charge profile according to SOC, and an SOC value at which lithium precipitation occurred was measured by evaluating an inflection point in the corresponding charge profile as a point at which the lithium precipitation occurred.

Also, the coin half-cell was charged at 0.1C to 0.005 V in a constant current/constant voltage (CCCV) mode with a current cut-off of 0.005C, and discharged at 0.1C to 1.5 V in a CC mode to measure discharge capacity and initial efficiency.

Measurement results are presented in Table 2 below.

**[Table 2]**

| | Comparati ve Example 1 | Comparati ve Example 2 | Example 1 | Example 2 | Example 3 |
|---|---|---|---|---|---|
| Tap density (cc/g) | 1.00 | 1.02 | 1.1 | 1.08 | 1.06 |
| d(002) (nm) | 0.3358 | 0.3359 | 0.3361 | 0.3362 | 0.3364 |
| Lc (nm) | 39.4 | 38.8 | 38.1 | 38.0 | 37.5 |
| Discharge capacity (mAh/g) | 355 | 354 | 351 | 350 | 347 |
| Initial capacity efficiency (%) | 93 | 93 | 93 | 93 | 93 |
| 3C SOC (%) | 33 | 34 | 36 | 38 | 39 |

According to Table 2, the artificial graphites of Examples 1 to 3 prepared by using the precursor having an oxygen content of 3 wt% to 15 wt% had an interplanar spacing d(002) of a (002) plane of 0.3360 nm or more and a crystallite size Lc in a c-axis direction of 38.5 nm or less, wherein it may be confirmed that cavities were formed between crystal lattices. In contrast, the artificial graphites of Comparative Examples 1 and 2 prepared by using the precursor having an oxygen content of less than 3 wt% were found to have an interplanar spacing d(002) of a (002) plane of less than 0.3360 nm and a crystallite size Lc in a c-axis direction of greater than 38.5 nm.

Also, tap densities of the artificial graphites of Examples 1 to 3 were found to be higher than tap densities of the artificial graphites of Comparative Examples 1 and 2.

Furthermore, the coin half-cells using the artificial graphites of Examples 1 to 3 exhibited a higher SOC value at which the lithium precipitation occurred during 3C charging than the coin half-cells using the artificial graphites of Comparative Examples 1 and 2, and this shows that the rapid charging performance was improved when the artificial graphites of Examples 1 to 3 were used.

## Claims

1. A method of preparing a graphite-based negative electrode active material, the method comprising:
forming a precursor having an oxygen content of 3 wt% to 15 wt% by grinding and granulating a carbon-based raw material; and
preparing artificial graphite having an interplanar spacing d(002) of a (002) plane of 0.3360 nm to 0.3370 nm and a crystallite size Lc in a c-axis direction of 30.0 nm to 38.5 nm by graphitizing the precursor.

2. The method of claim 1, wherein the carbon-based raw material comprises needle cokes, mosaic cokes, coaltar pitch, resin pitch, soft carbon, or a combination thereof.

3. The method of claim 1, wherein the forming of the precursor having an oxygen content of 3 wt% to 15 wt% is performed by performing at least one of the grinding and the granulating while heating to 200°C to 300°C in an oxygen atmosphere.

4. The method of claim 3, wherein the heating is performed at a heating rate of 1°C/min to 20°C/min.

5. The method of claim 1, wherein the forming of the precursor having an oxygen content of 3 wt% to 15 wt% is performed by a method of grinding and granulating the raw material and supplying air at 100°C to 300°C to bring the air into contact with the raw material.

6. The method of claim 1, further comprising forming a carbon-based coating layer by mixing the artificial graphite with a carbonaceous material and carbonizing the mixture, after the preparing of the artificial graphite.

7. The method of claim 6, wherein the carbonaceous material is pitch.

8. The method of claim 1, wherein the artificial graphite comprises cavities in a crystal lattice.

9. A graphite-based negative electrode active material comprising artificial graphite having an interplanar spacing d(002) of a (002) plane of 0.3360 nm to 0.3370 nm and a crystallite size Lc in a c-axis direction of 30.0 nm to 38.5 nm.

10. The graphite-based negative electrode active material of claim 9, wherein the graphite-based negative electrode active material has a tap density of 0.90 g/cc or more.

11. The graphite-based negative electrode active material of claim 9, wherein the artificial graphite is prepared by graphitizing a precursor having an oxygen content of 3 wt% to 15 wt%.

12. A negative electrode comprising any one of the graphite-based negative electrode active materials of claims 9 to 11.

13. The negative electrode of claim 12, wherein, when a half-cell prepared with the negative electrode and a lithium metal counter electrode is charged at 3C, a state of charge (SOC) value at which lithium precipitation occurs is 35% or more.

14. A lithium secondary battery comprising the negative electrode of claim 12.
